# EUROPEAN PATENT APPLICATION

(11) **EP 4 775 028 A1**
(43) Date of publication of application: **15.07.2026**
(21) Application number: 25461503.2
(22) Date of filing: 09.01.2025
(51) Int. Cl.: A01K 47/06

(54) **COMPUTER-IMPLEMENTED METHOD FOR MONITORING AND PREDICTING BEE COLONY HEALTH AND SYSTEM FOR MONITORING AND PREDICTING BEE COLONY HEALTH**

(71) Applicant: APISENSE Sp. z o.o., 30-699 Krakow (PL)
(72) Inventor: CIBOR, Sebastian, 30-699 Krakow (PL); WIERZBINSKI, Michal, 34-700 Rabka-Zdroj (PL); KADZIOLKA, Bartosz, 31-351 Krakow (PL); LUPA, Michal, 32-010 Sulechow (PL)
(74) Representative: Czarnik, Maciej

(57) **Abstract**

A computer-implemented method of monitoring and predicting the risk of occurrence of bee pathogens and environmental hazards, as well as a system for the implementation of this method, being based on volatile organic compounds (VOCs) analysis, Internet-of-Things (IoT) type sensors, machine learning and satellite data. The invention concerns both effective data transmission from sensors to the cloud computing, their storage and processing, as well as the application of learning methods data analysis and interpretation to support the management of beehives and to support the management of detection of pathogens.

## Description

The present invention relates to a computer implemented method of monitoring and predicting the risk of occurrence of bee pathogens and environmental hazards and a system for the implementation of this method, based on the analysis of volatile chemical compounds, Internet-of-Things (loT) type sensors, machine learning and satellite data. The present invention is connected both with the effective transmission of sensor data to a cloud database, its storage and processing, as well as with the implementation of machine learning methods for the analysis and interpretation of data in order to support beehive management and pathogen detection.

Honey bees (*Apis mellifera)* play a key role in global ecosystems and agriculture and are responsible for the pollination of more than 75% of the world's food crops, which translates into an estimated value of €466 billion each year. Unfortunately, due to anthropogenic impact and climate change, bees are increasingly vulnerable to various diseases, especially to: American foulbrood, European foulbrood, Vairimorpha spp. (Nosema spp.), varroa caused by the Varroa destructor, Chalkbrood (Ascosphaera apis).

Bees are susceptible to diseases caused by bacteria, fungi, protozoa, mites, and only true beekeeping experts can accurately identify and, more importantly, treat these conditions. In some cases, it is sufficient to supply a colony with nutritional supplements in order to strengthen it and enable it to fight pathogens on its own. But in some situations it is necessary to administer stronger drugs in appropriate doses and at the right time, for example when dealing with varroa amitraza. In the case of diseases such as American or European foulbrood, where no effective treatment is available or where the use of antibiotics is prohibited (e.g. in the EU), as the consumption of antibiotic-contaminated honey can be dangerous, the early detection and isolation of an infected beehive is crucial. Beekeepers are greatly responsible for the health of their bees, as they make independent treatment decisions and select the appropriate drugs. This is a difficult task, as the symptoms of infection are not always visible to the naked eye. A delayed diagnosis may allow the disease to spread not only within the particular beehive, but across the entire apiary, which can potentially lead to disastrous consequences. While losses incurred by colonies are caused by a complex combination of natural and anthropogenic factors, scientists agree that diseases and pests are their main causes.

The current methods of the detection of foulbrood (and other diseases in bees) are mainly based on manual inspections and in vitro tests, which are time-consuming and largely dependent on the experience of the beekeeper. This increases the risk of an incorrect or delayed diagnosis, which can lead to the spread of the disease to other apiaries. Unfortunately, there is no single drug that can completely eliminate foulbrood. Although antibiotics such as oxytetracycline and chloramphenicol are able to stop the spread of foulbrood-causing bacteria, they are not able to eradicate bacterial spores. This means that the disease can reappear even 30 years following its treatment using antibiotics. The endurance of spores makes such bacteria particularly difficult to eradicate, as they can survive in soil, wax, wood and other beekeeping equipment, even after the infected colony has been removed. Furthermore, the use of antibiotics in the treatment of foulbrood is illegal in the European Union, due to the risk of the contamination of honey and the development of bacterial resistance to antibiotics.

The existing field diagnosis of bee pathogens, such as American foulbrood, is based on several methods:
- a visual inspection of honeycombs - which involves the inspection of each frame in the hive to initially identify any signs of disease. The process is prone to human error and depends on the experience of the beekeeper. It is time-consuming and opening the beehives can contribute to the spread of the disease through infected equipment, which is particularly important in large apiaries consisting of more than 100 beehives.
- in-vitro tests - such tests specifically react to antibodies related to the *Paenibacillus larvae* (that cause American foulbrood) and *Melissococcus plutonius* (that cause European foulbrood) pathogens. Although this diagnostic method reduces errors resulting from the inexperience of a beekeeper, it still requires the opening of the hives and the sampling of infected brood cells, which makes it less convenient in the case of large apiaries (often professional apiaries). Additionally, it is necessary to visually identify any potentially infected cells beforehand.
- scent-detecting dogs - trained to detect infected beehives. Although they are quite effective, their use is limited due to high costs, long training periods and difficult working conditions, involving the risk of bee stings and high temperatures, especially when the dogs have to wear protective suits.

Scientists have identified more than 2,000 pheromones in a beehive that play a key role in the communication between bees and their larvae. Being volatile organic compounds (VOCs), pheromones have various functions:
- communication within a colony: pheromones enable the transmission of information about the strength of a colony, brood size and the health of the mother. They influence the behaviour of the worker bees which are responsible, for example, for feeding the brood, plugging and cleaning the cells. VOCs are emitted from eggs as a result of the 'trace' left by the mother and the workers.
- indication of food sources: Apart from using the waggle dance, bees use pheromones to indicate the visited flowers, which improves the efficiency of the collection of food. Bees also respond to pheromones that indicate contamination with pesticides.
- informing of existing risks: Alert pheromones warn the bees of the presence of predators such as hornets, hive beetles or humans. Released as a result of a bee sting or crush, they trigger a defensive response from other individuals.
- reaction to stress and sickness: Bees emit specific pheromones in response to diseases such as varroa, American foulbrood, nosema and lime fungus. Moreover, in the event of foulbrood (brood disease), the rotting larvae release characteristic VOCs, which enables the identification of this disease.

VOCs are a broad group of highly volatile compounds that are emitted by organisms (plants, animals, micro-organisms), as well as during industrial processes. Volatile pheromones constitute a part of VOCs, but not every VOC is a pheromone - not all of them perform an interspecies communication role.

Volatile organic compounds (VOCs) act as biomarkers of bee diseases, behaviour and brood, helping in the early diagnosis of diseases, detection of any attacks by predators and the monitoring of the health of a colony, the availability of food and the quantity of brood. Pheromones - chemical compounds used for communication between individuals of the same species - have a unique role among VOCs. When emitted into the environment, they generate specific reactions, such as alarm signals, mating behaviour or territorial marking. Due to their volatility, pheromones spread quickly in the air and are easily picked up by other individuals.

International Patent Application No. WO2021062474 A1 describes a non-invasive method for detecting American foulbrood (AFB) in bee hives, which comprises (1) taking a sample from the hive, (2) testing this sample for the presence of compounds from a list of compounds specified in the document, which constitute compounds released by the *Paenibacillus larvae* bacteria present in honey bee larvae; wherein the presence of one or more of these compounds in the amounts that are at least relatively three times greater than in an uninfected hive, indicates the presence of AFB in the beehive.

International Patent Application No. WO2023044526 A1 discloses a device for the detection of American foulbrood in honey bee hives using the presence of one or more of the following compounds: heteroaromatic compounds (pyrazine and indole compounds); and/or sulphide compounds. The device comprises: a physical substrate that reacts with at least one of the following reactants: a) an indole reactant; b) a sulphide reactant; and/or c) a pyrazine reactant, wherein the device is suitable for the detection of at least one diagnostic compound.

US Patent Application No. US10555505 B2 discloses a monitoring system, a device and a method for the detection of chemicals in an insect environment, such as a hive or a colony. The method may comprise the monitoring the of the insect environment for the presence of at least one chemical or environmental agent using at least one sensor located in the insect environment, wherein the at least one sensor is capable of generating data in response to the presence of the at least one chemical or environmental agent and transmitting the data to an associated data processing device, the monitoring of insect populations in the environment to detect any changes in the population or health of insects within the population, and the generation of a correlation between a detected change in the population or health of insects in the insect environment and the increase or decrease of at least one chemical agent present beyond the insect environment. The present invention provides the necessary data that commercial farmers and beekeepers need to determine the appropriate level of pesticides used in order to protect plants from pests, but without harming the natural pollination sources, including those of honey bees.

Patent Application No. US11612145 B2 discloses a system and method for the management of bee colonies to increase bee productivity for crop pollination. The description of the invention indicates that it provides a computer implemented method of training a machine learning model that involves: the calculation of at least one in-colony feature indicative of the internal condition of a sample honey bee colony, set up to pollinate at least one crop in a geographic area, on the basis of the output data from at least one in-colony sensor that monitors the honey bee colony, the calculation of at least one out-of-colony feature indicative of the out-of-colony environment of the sample honey bee colony, on the basis of the output data from at least one out-of-colony sensor that monitors the honey bee colony environment, the generation of a multi-record set of training data, the record comprising: a combination of at least one in-colony feature and at least one out-of-colony feature and a base truth label indicating the efficiency of the pollination of the sample honey bee colony, and the training of a machine learning model on the multi-record training data set.

Likewise, Chinese Patent Application No. CN114907961 A discloses a device for the detection of pathogen virulence in bees, a method for the detection of pathogen virulence using the said device and an application, wherein the invention relates to the field of bee keeping. The invention relates to a device for the detection of pathogen virulence in bees. The device consists of a top plate, side plates, a partition plate, a back plate, a front plate, a bottom plate, a feeding hole and a cavity. The device enables the assessment of the impact of the mode of contact on the virulence of the bee virus and its propagation rate. This forms the basis for the subsequent detection of bee viruses.

The aim of the present invention is to develop an integrated system according to the invention and a procedure which, through the combination of artificial intelligence, satellite data, IoT sensors and weather information, would be capable of real-time monitoring , early detection of bee pathogens and their propagation in the environment, which would further improve biological safety both externally (by preventing the ingress of diseases into the apiaries), as well as internally (by limiting the propagation of diseases within and between the beehives).

The new, innovative method and system according to the invention allows beekeepers, including the less experienced ones, to identify and address any potential hazards before they escalate, limiting the need of using chemical treatments, assisting beekeepers in their management of organic apiaries and improving honey quality.

The present invention relates to a system for the monitoring and predicting the risk of occurrence of bee pathogens and environmental hazards, characterised in that it comprises:
a) at least one loT sensor (1) located in a single hive and provided with at least one detector (2) for the measurement of environmental parameters: the concentration of volatile organic compounds (VOCs), temperature and humidity,
b) an loT gateway (3) that collects data from loT sensors (1) located in different beehives of the same apiary, also provided with an electronic module that enables the geographic location of an apiary with beehives via its connection with a satellite system, and transmits information to a back-end system located within a computing cloud,
c) a module (4) that provides satellite imagery and information on weather conditions,
d) a machine learning module (5) that estimates the probability of occurrence of bee pathogens such as fungi, bacteria, viruses and parasites,
e) a map generation module (9) that indicates the probability of occurrence of the risk of a specific pathogen,
f) a user interface module (10) for the presentation of data related to the risk of occurrence of bee pathogens in a beehive.

Preferably, the system additionally comprises one or more modules selected from the following list: a machine learning module (6) that predicts the phenological stages of pollen- and nectar-producing plants, a machine learning module (7) that predicts the anthesis of pollen- and/or nectar-producing plants, a machine learning module (8) that predicts the propagation of pathogens in the environment.

Detector (2) is preferably an electrochemical or a semiconductor gas detector, more preferably a type BME680, BME688, SGP40 or SGP41 detector.

The system preferably comprises at least one apiary scale (11), provided with a temperature and humidity sensor.

The system is preferably provided with an additional detector (2) for the measurement of the following parameters: CO₂, NO₂, ethanol, O₃.

IoT sensor (1) is preferably provided with a digital microphone (12) that allows the analysis of changes in sound characteristics.

A reduction of the intensity or a change in the frequency of sounds may indicate the presence of stress or disease in a colony.

IoT sensor (1) is preferably located on the frame in the beehive nest, or on the vented inner cover of the beehive.

The computer implemented method of monitoring and predicting the risk of occurrence of bee pathogens and environmental hazards is characterised in that it comprises the following steps:
a) the registration of the following environmental parameters: the concentration of volatile organic compounds (VOCs), temperature, humidity, by at least one loT sensor (1) provided with at least one detector (2) located in a single beehive,
b) the transmission of registered environmental parameters by the at least one loT sensor (1) to loT gateway (3),
c) the transmission of data from module (4) that provides satellite imagery of areas in the vicinity of the apiary within a 5 km radius and information on weather conditions in areas in the vicinity of the apiary within a 5 km radius, to loT gateway (3).
d) the compression and transmission of data, preferably via an LTE/5G network, from loT gateway (3) to a back-end system located within a computing cloud,
e) the transmission of data to a machine learning module that estimates the probability of occurrence of bee pathogens such as fungi, bacteria, viruses, parasites (5),
f) the processing of data in machine learning modules, using at least one classification algorithm selected from the following list: Light Gradient Boosting Machine (LightGBM), Random Forest, Extreme Gradient Boosting (XGBoost), Extra Trees, Logistic Regression, Long-Short Memory Neural Network (LSTM-NN), Transformer architecture-based neural network models,
g) the analysis of results and the generation of maps showing risk areas of the higher probability of occurrence of pathogens and possible directions of their propagation.

Data collected in step a) preferably also includes one or more parameters of the concentration of compounds included in the group that comprises CO₂, NO₂, ethanol, O₃.

The detector is preferably an electrochemical or a semiconductor gas sensor, more preferably a type BME680, BME688, SGP40 or SGP41 detector.

The data in step a) is preferably collected using MEMS and/or CMOS technology.

Data such as: the weight, temperature, humidity outside of the beehive is preferably collected using apiary scale (11).

Data from loT sensors (1) to loT gateway (3) is preferably transmitted using wireless communication technology, preferably using the Bluetooth Low Energy (BLE) protocol.

Data transmitted in step e) is additionally transmitted to at least one additional module from the following list: a machine learning module (6) that predicts the phenological stages of pollen- and nectar-producing plants, a machine learning module (7) that predicts the anthesis of pollen- and/or nectar-producing plants, a machine learning module (8) that predicts the propagation of pathogens in the environment.

The machine learning module (5) in step (e) that estimates the probability of occurrence, preferably applies to bee pathogens selected from the following group: *Varroa destructor, American foulbrood, European foulbrood, Nosema spp, Ascosphaera apis.*

A key advantage of the present invention is the use of an integrated set of sensors for the complex analysis of chemical and environmental parameters, which allows for the precise diagnosis and specification of various bee diseases on the basis of changes registered in the beehive. The system according to the invention is based on a set of electrochemical and/or semiconductor gas detectors of the MEMS and/or CMOS technology, which integrate sensory and electronic elements in a single microprocessor, thus ensuring high sensitivity and low power consumption.

The most important function of the system is the detection of a wide range of volatile organic compounds (VOCs), which are crucial to the monitoring of the health of bees and to the identification of pathogens. VOCs act as biomarkers and enable the early detection of diseases and the monitoring of colony behaviour, such as brooding or food stock levels.

The system also registers other gaseous and environmental parameters, such as the concentration of carbon dioxide (CO₂), oxygen (O₂), nitrogen dioxide (NO₂), ozone (O₃), sulphur compounds, as well as temperature, humidity and pressure, thereby providing additional information about the conditions present in the beehive, in case they are relevant to the specific diagnostic situation.

Because of the miniaturisation of elements in the MEMS and/or CMOS technology, the set of detectors can be mounted in strategic locations in the beehive, such as the frames, the vented inner cover or the enclosure, which allows for the precise measurement of subtle environmental changes. The detectors react to low levels of concentration of substances, which allows the early detection of diseases and the detection of hazards without the need to open the hive. Although the detectors do not indicate specific chemical compounds, the use of artificial intelligence/machine learning allows for data analysis and the identification of patterns that indicate the presence of specific hazards in the hive.

The integrated solution according to the invention enables the effective monitoring of the health of bees and the identification of environmental hazards in real time, helping in the early detection of diseases and in the protection of colonies. Research has shown that in the case of infection with pathogens such as varroa, foulbrood or nosema, the profile of VOCs emitted in the beehive changes, wherein such qualitative and quantitative changes are registered by a set of detectors to support AI algorithms in the analysis of the health of bees. Because of the integration of the loT gateway with the GPS/Galileo module, the system also monitors the location of the apiary and current hazards, with the additional use of satellite and weather data. This information facilitates the prediction of phenological stages and the prediction of anthesis of pollen- and nectar-producing plants. The system's AI modules predict the pattern of propagation of pathogens in the environment and provide the beekeeper with maps and notifications of any potential hazards in his apiary.

The method and system according to the invention also contributes to the reduction of the use of chemicals, as early detection and precise tracking of diseases reduces the need for chemicals, which translates into better honey quality and healthier bee colonies.

The solution according to the invention allows the user to obtain a fuller picture of the occurrence and possible directions of propagation of bee diseases, significantly increasing the ability of beekeepers and veterinary services to respond to any existing hazards. The effectiveness of the treatment of American bee foulbrood, for example, depends on a quick response, the accuracy of procedures and the monitoring of the bees' nest during the recovery period. Under current Polish legislation, American foulbrood is subject to compulsory eradication. If the presence of American foulbrood is suspected in an apiary, the beekeeper is obliged to report it immediately to the Veterinary Inspectorate or to the local mayor (*Wójt*). If the presence of the disease is confirmed by a veterinarian, further measures are taken to prevent its further propagation. Any further actions to be undertaken in relation to bee colonies depend on various factors, such as the condition of the colonies, the severity of the disease, the time of year, the technical condition and the structural material of the beehives. Depending on the situation, the veterinarian may decide to destroy the colony and to decontaminate the equipment, to destroy the colony and equipment through incineration, or to resettle the bees to a decontaminated hive and to burn the nest and the brood. The availability of data collected and processed using the invention facilitates such decisions, while the invention also enables the aggregation of data obtained from veterinary authorities of various jurisdiction, the generation of a full picture of the area of occurrence and of the directions of propagation of the disease, thus improving the coordination of measures taken to eradicate the disease.

The subject of the invention has been explained in more detail using embodiments shown in the Figures, where:
Fig. 1 shows a diagram of the system according to the invention in its basic form, according to Example 1,
Fig. 2 shows a diagram of the system according to the invention in its extended form, according to Example 2,
Fig. 3 shows a graph with the ranking of the 10 most important learning features, shown according to their feature importance in the process of classification according to Example 3 (American foulbrood research),
Fig. 4 shows a graph with the ranking of the 10 most important learning features for the Random Forest according to Example 4 (varroa research),
Fig. 5 shows the ranking of the 10 most important learning features for the Decision Tree model according to Example 4 (varroa research),
Fig. 6 shows a graph with the ranking of the 10 most important learning features for the Logistic Regression model according to Example 4 (varroa research),
Fig. 7 shows a graph with the hierarchy of the influence of individual variables on the prediction results according to Example 5 (nosema research).

### Example 1

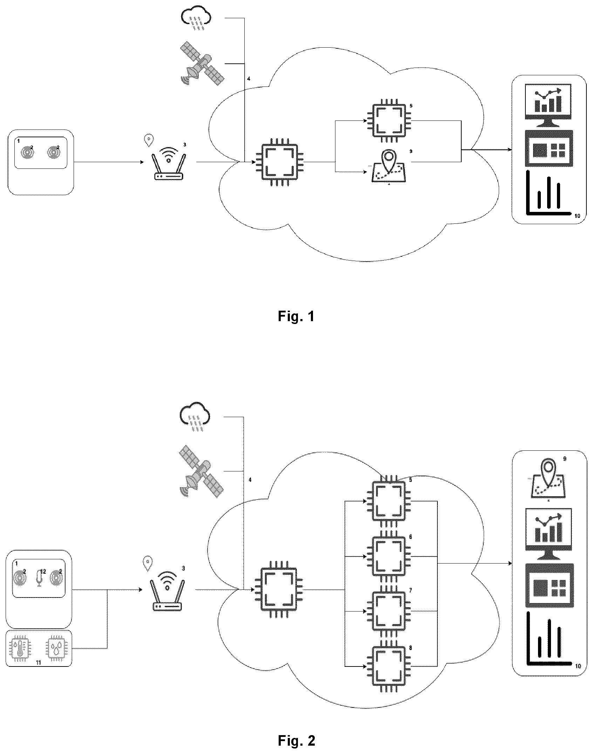

The system for the monitoring and predicting the risk of occurrence of bee pathogens and environmental hazards according to the invention is shown in Fig. 1 and comprises:
a) a sensor (1) located in a single beehive on a frame, provided with two type BME688 and SGP41 electrochemical gas detectors (2), which measure the following environmental parameters: the concentration of volatile organic compounds (VOCs), temperature, humidity, CO₂, NO₂, ethanol, O₃,
b) an IoT gateway (3) that collects data from sensors (1) located in different beehives of the same apiary and transmits the information to a back-end system hosted in a cloud, which contains information on the location of the apiary,
c) a module that provides satellite imagery and information on weather conditions (4),
d) a machine learning module that estimates the probability of occurrence of bee pathogens such as fungi, bacteria, viruses and parasites in a beehive (5),
e) a map generation module (9) that indicates the probability of occurrence of the risk of a specific pathogen,
f) a user interface module (10) for the presentation of data related to the risk of occurrence of bee pathogens in a beehive,

A single set of loT sensors, located in a beehive that contains up to 80,000 bees operating within a 5km radius, provides disease data for a 78km² area. The combination of this data with satellite data related to the anthesis of plants, the terrain and weather, enables the accurate determination of the direction and speed of propagation of pathogens.

The computer implemented method of monitoring and predicting the risk of occurrence of bee pathogens and environmental hazards comprises the following steps:
1. Data processing: The upload of data from the detectors to the cloud (Data Store):
   - loT detectors (2) collect data such as temperature, humidity, CO2, volatile organic compounds (VOCs)
   - Detectors (2) transmit data to the loT gateway (3) using Bluetooth Low Energy (BLE) connectivity.
   - The loT gateway (3) compresses data for more efficient data transmission.
   - The loT 3 gateway transmits the compressed data via an LTE network to a back-end system using API Measurements.
   - API Measurements authenticates and then authorises the gateway for the compressed data transmission.
   - API Measurements saves the data in raw and decompressed form in a data store (AWS S3),
   - API Measurements saves the metadata in a database (PostgreSQL),
   - Information about the new data is sent to a FIFO (First In, First Out) queue, which ensures that is it processed in the order in which it was sent,
2. The download of satellite imagery data and weather information:
   - Satellite imagery and weather data is downloaded periodically (daily) by the back-end system and stored in a data store (AWS S3).
3. Data processing during the development of the ML pipeline:
   - The machine learning (ML) pipeline is developed using distributed infrastructure, mainly with the use of container orchestration and process orchestration (e.g. AWS EKS and Flyte).
   - Data stored in the data store (raw data from the detectors and environmental data from the Amazon Open Data Registry) is processed for pre-processing and feature extraction.
   - Pre-processing involves the cleaning and standardisation of time series data obtained from the detectors.
   - Parallel computing clusters (such as Dask) are responsible for the handling of intensive processing tasks, such as the processing of large satellite and environmental datasets.
4. The development of ML models:
   - Machine learning models used for the detection of parasites in bees are trained on pre-prepared data,
   - An MLFlow tool is used for the monitoring of experiments and the management of models and their versions,
   - ML forecasts are carried out during daily input processes, which are handled using the Flyte platform,
   - Processed data and results are registered in data stores and databases, such as InfluxDB (for the analysis of time-related data) or PostgreSQL (for table-structured data).

### Example 2

The system for monitoring and predicting the risk of occurrence of bee pathogens and environmental hazards according to the invention is shown as in example 1, with the exception that:
Sensor (1) is located in a single hive on the vented inner cover, which enables stable and easy installation in a location with relatively constant environmental conditions inside the beehive.

Sensor (1) is provided with an integrated set of semiconductor detectors (2) that includes at least 2 of BME680, BME688, SHT40, SGP30 and SGP41 detectors. This enables the measurement of not only the concentration of volatile organic compounds (VOCs), temperature and humidity, but also of CO₂, NO₂, ethanol, O₃ and other environmental parameters.

The system is additionally provided with an apiary scale (11) integrated with a sensor that measures the temperature and humidity outside the beehive. This scale provides information on changes in the weight of the beehive in time, which enables an indirect assessment of the condition of the colony, the dynamics of food accumulation and consumption and of the changes in bee population. This information can be crucial to the analysis of correlations with health indexes and the occurrence of pathogens.

Sensor (1) is provided with a digital microphone (12) for the acoustic analysis of a bee colony. The characteristics of sounds generated in the hive - their frequency, intensity and change patterns - can indicate the presence stress or disease in a colony. The reduction of sound intensity, variation in buzzing characteristics or the presence of unusual acoustic patterns may indicate infection, the presence of parasites or the deterioration in living conditions of the bees. This data provides an additional level of information that, together with the measurement of environmental parameters, enables an even more accurate diagnosis of the health of bees.

The system is supplemented with machine learning modules (6, 7, 8):
- Module (6) for the prediction of the phenological stages of pollen- and nectar-producing plants. It enables the prediction of the periods of availability of food resources for the bees, which is important for the assessment of the overall health of the colony and its susceptibility to pathogens.
- Module (7) for the prediction of the anthesis of pollen- and/or nectar-producing plants. The analysis of satellite data, weather data and phenological signs enables the identification of periods of peak food supply within the bees' flight range, which has a direct effect on the health and resilience of the colony.
- Module (8) for the prediction of the propagation of pathogens in the environment. On the basis of data collected from multiple hives, the analysis of volatile organic compounds, atmospheric parameters, the dynamics of changes in a colony and information on plant resources, the system is able to predict the direction and rate of the propagation of pathogens, thus helping to prevent the occurrence of disease outbreaks.

Data collected and processed using this full-scale system is obtained from multiple sources:
- Data from detectors (2) located inside the beehive: VOC, temperature, humidity, CO₂, NO₂, ethanol, O₃, additional chemical and physical parameters.
- Data from the apiary scale (11): weight of the hive, the temperature and humidity outside the hive. Changes in the weight may indicate the presence of a disease (e.g. lower collective activity of the bees', or higher consumption of foodstocks during the infection period).
- Data from the digital microphone (12): variations in sound characteristics, buzz intensity, unusual acoustic patterns.
- Satellite imaging data (4): the monitoring of a 5 km area around the apiary, information on the anthesis and phenological stages of plants, the environmental conditions and terrain.
- Weather data (4): temperature, rainfall, humidity, atmospheric pressure, wind strength and direction in the area around the apiary. This information enables the correlation of weather events with the occurrence and development of bee diseases and the availability of forage.
- Data from machine learning modules (5, 6, 7, 8): the prediction of occurrence of pathogens inside the beehive, the prediction of phenological stages, the anthesis of plants and of the propagation of pathogens in the environment.

A computer implemented method of data processing using the present full-scale system:
- Data from the detectors (2) is transmitted to the loT gateway (3) using Bluetooth Low Energy (BLE) wireless communication.
- loT gateways (3) compress the data to improve the efficiency of their transmission, and then send the data to a back-end system hosted in a cloud using LTE networks, or other technologies.
- The system is cloud-agnostic, which means that it can be deployed on any public cloud platform (e.g. AWS, Azure, GCP) or in an on-premises model, which ensures the system's flexibility.
- The back-end system hosted in a cloud keeps the data in data stores (e.g. S3, blob storage, Cloud Storage), stores metadata in SQL databases (e.g. PostgreSQL) and uses FIFO queues to ensure the correct order and the reliability of the processing of streaming measurement data.
- Satellite images and weather data are downloaded periodically (e.g. daily) and also kept in a data store. Additional environmental data can be obtained from Amazon Open Data Registries, or other similar open data sources.
- ML pipelines are generated on the basis of container environments and computing clusters (e.g. Kubernetes/EKS, Flyte, Dask) and are responsible for the pre-processing of data, the extraction of features from environmental parameters, acoustic signals and satellite data.
- ML models, such as LightGBM, XGBoost, Random Forest, Extra Trees, Logistic Regression, LSTM-NN or Transformer models, are taught using processed data with the aim of generating predictions related to the presence of bee pathogens and environmental risks.
- MLFlow, or a similar system for the management of ML experiments, controls the versioning of models, their archiving and deployment, and is also responsible for the tracking of quality data.
- The results of the analyses, including risk maps (9), reports on the probability of occurrence of specific bee diseases (Varroa destructor, American foulbrood, European foulbrood, Nosema spp., Ascosphaera apis ), or information on the range and dynamic characteristics of the propagation of pathogens in the environment, are presented to the end user via a user interface module (10).

The integration of all data sources - environmental detectors, apiary scales, digital microphones, satellite imagery, weather data and predictive modules (6,7,8) - provides the user with a full-scale picture of the state of the apiary, the condition of the bees, the availability of forage and the risks present in the environment. This enables an early detection of any diseases, the precise planning of interventions, which reduces the use of chemicals and increases the quality of bee products.

The full-scale system according to the invention therefore represents a complex early-warning, monitoring and action planning system for the beekeeping industry that is compatible with all cloud environments and ensures scalability, flexibility and a broad range of applications.

### Example 3

The method and system according to the invention was tested in real-life conditions. The research was carried out at the Educational/Scientific Apiary of the Wroc 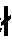 aw University of Life Sciences, located within the premises of the Agricultural Experimental Station at ul. Wschodnia 68 in Wroctaw, and lasted until 30/09/2024.

### 1. The preparation of experimental apiaries

Twenty-five bee colonies were selected, of which six colonies residing in the Wroctaw area qualified for further study. Additionally, as a result of cooperation with beekeepers in 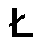 ódź, three bee colonies from that region were also included in the experiment.

### 2. Characterisation of the analysed groups

The selected bee colonies were divided into groups infected with American foulbrood and healthy groups. Within the infected group, the infection with *Paenibacillus larvae* bacteria was revealed using biochemical tests. Healthy families performed the role of control groups, which allowed the observation of differences in data obtained from sensors located in healthy and infected hives.

### 3. Manual inspections of the hives:

Manual inspections included the inspection of the health of colonies through the assessment of the visual appearance of brood (compact or dispersed) and identification of larvae with signs of American foulbrood infection. Infections were diagnosed using the VITA AFB/EFB diagnostic test, which is able to quickly reveal the presence of *Paenibacillus larvae.* At least two tests were carried out in each hive and the results were recorded on hive data sheets for the regular monitoring of the health of colonies.

### 4. Installation and validation of loT sensors

The scope of research included the installation of the system according to the invention, which comprised of loT sensor kits that consisted of three detectors for the monitoring of environmental parameters, an apiary scale, a counter-batten and an LTE gateway for data transmission. The installation of the sensors was preceded by the verification of their correct operation in a laboratory. The sensors were installed inside the hives and LTE gateways were located nearby, in order to ensure the continuous transfer of data to the analytical system.

### 5. The collection of measurement data:

Measurement data from the loT sensors was collected from the moment of their installation until the termination of the research on 30th September 2024. Measurements were made at regular intervals and data on environmental parameters such as temperature, humidity and the concentration of gases was transmitted in real time via LTE gateways to a central database. The system facilitated the monitoring of the condition of equipment and the monitoring of changes observed inside the hives.

### 6. Data labelling

The examination of the health of bee colonies carried out at the beginning of the project helped to qualify all of them for the study and enabled the installation of sensors. Bees, brood, honey and bee bread were samples 3 times during the study. At the beginning of the project, 7 days after the start of the project and during the last week of the project. The study revealed the presence of *Peanibacillus larvae* bacteria in 4 bee colonies that were qualified for research at the initial stage of the project. The bacteria were found in the cooperating apiaries, of which their owners were informed.

### 7. The training of machine learning models

The algorithms were selected on the basis of the diversity of classification methods and their ability to simulate the relations between features defined on the basis of measurements taken at low and high sampling frequencies, including parameters such as atmospheric pressure, temperature, gas resistance, relative humidity, cumulative VOCs and their sensitivity to changes in concentration. The aim of this analysis was to determine the relation between these parameters and the results of the classification of the infection of bees with the *Peanibacillus larvae* parasite. Considering the complex relationship between physical parameters and the degree of infection, and the wide range of the studied features, the analysis was carried out using 15 classification algorithms: AdaBoost Classifier, CatBoost Classifier, Decision Tree Classifier, Extra Trees Classifier, Extreme Gradient Boosting (XGBoost), Gradient Boosting Classifier, K Neighbors Classifier, Light Gradient Boosting Machine (LightGBM), Linear Discriminant Analysis (LDA), Logistic Regression, Naive Bayes, Quadratic Discriminant Analysis (QDA), Random Forest Classifier, Ridge Classifier, SVM - Linear Kernel.

The process of training the models took into account the specific character of data and the details connected with its processing and preparation for analysis. Data connected with the infection with American foulbrood was collected once a week, while physical features (such as atmospheric pressure, temperature, humidity, etc.) were registered daily on an hourly basis.

The training diagram consisted of the following steps:
- Initial configuration: All models were initiated using default parameters and with the random_state=42 setting, in order to ensure the reproducibility of results and comparative stability. This provided a point of reference for the further improvement of hyperparameters in subsequent analyses.
- Training on datasets divided on the basis of detector combinations, which included: BME688, SGP40 and SGP41.
- Assessment of the efficacy of the models using 5-fold cross-validation on a training set.
- The selection of the most promising model and the fine-tuning of hyperparameters.
- Final assessment on the basis of a test set - after the completion of the training process, models were evaluated on an additional, separate test set that was not previously involved in either training or validation. This generated independent results that represented the final assessment of the efficacy of the models in predicting infection with American foulbrood.

### 8. Validation and assessment of models

The testing was carried out on a dataset previously unknown to the models, for a reliable assessment of their performance. The accuracy, precision, sensitivity and f1-score were examined in the case of each beehive, in order to identify the models that are the most effective in the classification of the presence of foulbrood. The models were optimised on the basis of the F1-Score measure.

The analysis of F1-score for different models and sets of learning features (gas resistance - GR, volatile organic compounds - VOC and nitrogen compounds - NOX) enabled the selection of the best combinations. Of note is the fact that the models achieved the highest F1-scores when all three types of learning features (GR+VOC+NOX) were included in the training, which indicates the importance of a wider data set in the context of classification accuracy. The results of tests are shown in Table 1.

| **Model** | **GR** | **GR+ VOC** | **GR+ NOX** | **GR+VOC+ NOX** | **VOC** | **NOX** | **VOC+ NOX** |
|---|---|---|---|---|---|---|---|
| **Ada Boost Classifier** | 0.8287 | 0.9132 | 0.8976 | 0.9236 | 0.6130 | 0.8241 | 0.8864 |
| **CatBoost Classifier** | 0.8460 | 0.9320 | **0.9335** | **0.9561** | 0.7635 | 0.8062 | 0.9125 |
| **Decision Tree Classifier** | 0.8068 | 0.8770 | 0.8196 | 0.8461 | 0.6665 | 0.7520 | 0.8367 |
| **Extra Trees Classifier** | 0.8357 | 0.9146 | 0.8873 | 0.9456 | 0.7575 | 0.8095 | 0.8891 |
| **Extreme Gradient Boosting** | 0.8578 | 0.9287 | 0.8984 | 0.9170 | 0.7673 | **0.8368** | **0.9151** |
| **Gradient Boosting Classifier** | 0.8504 | 0.9262 | 0.8876 | 0.9151 | 0.7058 | 0.7970 | 0.8955 |
| **K Neighbors Classifier** | 0.8157 | 0.8771 | 0.8740 | 0.9374 | 0.6737 | 0.7880 | 0.8715 |
| **Light Gradient Boosting Machine** | **0.8614** | **0.9350** | 0.9160 | 0.9513 | **0.7711** | 0.8124 | 0.9010 |
| **Linear Discriminant Analysis** | 0.7742 | 0.8786 | 0.8368 | 0.9148 | 0.7435 | 0.8070 | 0.8924 |
| **Logistic Regression** | 0.7741 | 0.8821 | 0.8703 | 0.9387 | 0.6205 | 0.7716 | 0.9110 |
| **Naive Bayes** | 0.7535 | 0.7748 | 0.7830 | 0.8447 | 0.4660 | 0.6348 | 0.5343 |
| **Quadratic Discriminant Analysis** | 0.7612 | 0.8469 | 0.8557 | 0.8244 | 0.5029 | 0.7334 | 0.9121 |
| **Random Forest Classifier** | 0.8425 | 0.8887 | 0.8585 | 0.9302 | 0.7243 | 0.8040 | 0.8768 |
| **Ridge Classifier** | 0.7692 | 0.8594 | 0.7953 | 0.8868 | 0.5382 | 0.7503 | 0.8800 |
| **SVM - Linear Kernel** | 0.7021 | 0.8692 | 0.8461 | 0.8998 | 0.6967 | 0.7274 | 0.8994 |
| **AVERAGE** | **0.8053** | **0.8869** | **0.8640** | **0.9088** | **0.6674** | **0.7770** | **0.8676** |

As a result of an analysis of test results, the LightGBM model was selected for further optimisation of the hyperparameters. The LightGBM model not only achieved high F1-scores for most combinations of features, but also stood out in terms of computing effectiveness and stability in the case of large datasets. Because of these features, the LightGBM model has the greatest potential towards the optimisation of the classification process, which may significantly accelerate and improve the quality of predicting the occurrence of infections in apiaries.

Following the re-training of the model with the optimisation of hyperparameters, the LightGBM model achieved good results on a latent test dataset, which confirms its effectiveness in the detection of American foulbrood infections in beehives. These results indicate that the model is accurate in the identification of both healthy hives, as well as infected hives. An analysis of the confusion matrix and the ROC curve has indicated that the LightGBM model, following the optimisation of the hyperparameters, is extremely accurate and effective in classifying hives as healthy or infected. A high AUC value and a negligible number of misclassifications in the confusion matrix indicate that this model is very effective in the early detection of infections in apiaries, which is crucial in ensuring a swift response and for the protection of the health of bee colonies.

### 9. Explainability of model predictions

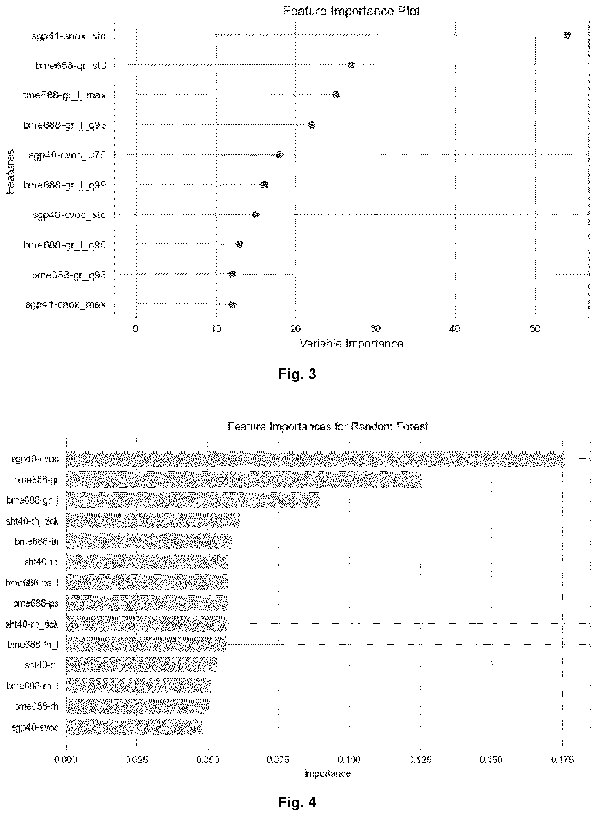

An analysis of the global explainability of the model has indicated which features have the highest effect on the predictions of the LightGBM model when detecting American foulbrood infections in apiaries. Fig. 3 shows a graph with the ranking of the 10 most important learning features, shown according to their feature importance in the process of classification.

Key features:
- sgp41-snox_std - the most important feature that had the biggest effect on model predictions was the standard deviation of the SNOx value measured by the SGP41 detector. The high importance of this feature indicates that the variability of nitric oxide levels may be a key indicator of a beehive's health and of the potential presence of infection.
- bme688-gr_std - the standard deviation of gas resistance values measured by the BME688 detector is also important in the context of model predictions. This suggests that the fluctuation of gas concentration values, which can include VOCs, is significant in the context of the detection of infections.
- bme688-gr_I_max - the maximum value of gas resistance measured by the BME688 detector proved to be another important feature. High gas concentrations may be indicative of infection-related changes in the biological activity inside a beehive.
- bme688-gr_I_q95 - the value of the 95th percentile for gas resistance values measured by the BME688 detector also significantly affected the model. This means that high gas values (closer to the top end of their distribution) may be indicative of an unhealthy condition of a hive.
- sgp41-cvoc_q75 - the third quartile of volatile organic compound (VOC) values measured by the SGP41 detector represents another important feature. Average VOC levels in the hive may be a sign of the health condition of the bees, wherein higher levels may be associated with the presence of an infection.
- bme688-gr_I_q99 - the value of the 99th percentile for gas resistance values measured by the BME688 detector indicates the high significance of extreme gas concentration values, which can be crucial to the detection of abnormal situations inside a hive.
- sgp41-cvoc_std - the standard deviation of VOC values measured by the SGP41 detector also affects the model results, highlighting the importance of the variability of these compounds in the assessment of the health of a bee colony.
- bme688-gr_I_q90 - the value of the 90th percentile for gas resistance values measured by the BME688 detector was also one of the top 10 features, again indicating the importance of higher concentration levels in the detection of infections.
- bme688-gr_q95 - the 95th percentile for gas resistance values measured by the BME688 detector represents another feature that is significant to the model. As before, higher gas values can be important in the detection of infections.
- sgp41-cnox_max - the maximum NOx value measured by the SGP41 detector is the last of the top 10 features. High levels of nitrogen oxides may indicate the presence of stress or infection in a bee colony.

The analysis of key features has indicated that variability and high gas and VOC values are key in the detection of American foulbrood infections in beehives. The standard deviation feature and high percentiles of the distribution of gas values are the most important indicators used by the model for classification. The above analysis of global explainability provides important information on the health of beehives and on potential infection biomarkers, and contributes to further research of the use of IoT sensors for the monitoring of the health of bees.

Research has shown that the method and system developed according to the invention, which comprises loT sensors and artificial intelligence models, is effective in detecting the presence of American foulbrood in beehives. The best prediction results were achieved with the combination of features obtained from the BME688 and SGP41 detectors, while the LightGBM model, following the optimisation of hyperparameters, proved to be the most effective in terms of F1-score and precision. These results confirm that the method and system according to the invention has the potential to effectively monitor the health of beehives, achieving high accuracy and a minimal number of false alarms.

### Example 4

The method and system according to the invention were implemented during the 2024 apiary season at the University of Life Sciences in Lublin, at the Department of Apiculture and the Department of Invertebrate Ecophysiology and Experimental Biology.

### 1. The preparation of experimental apiaries

The scope of research included the formation of groups of bee colonies of similar strength and structure: one as a control group, managed in accordance with good beekeeping practices, and an experimental one that was infected with *Varroa destructor.*

### 2. Characterisation of the analysed groups

Control colonies were treated using standard varroa treatment procedures, while the experimental groups were infected with the appropriate pathogens. The varroa-infected group was intentionally left without treatment, in order to observe the natural growth of the parasite population.

### 3. Manual inspections of the hives:

The scope of manual inspections included the inspection of the natural parasite shedding using hygienic bottom boards, the manual counting of mites and the testing of bee samples. Certain methods of the assessment of infestation were also implemented, such as the flotation of bees, in order to determine the level of infection more accurately. Haemolymph was also collected from the bees, in order to evaluate the concentration of immune proteins, which provided information on the immune response to infection.

### 4. Installation and validation of loT sensors:

The scope of research covered the installation of the system according to the invention, which comprised of loT sensor kits installed in bee colonies and within the apiary for the purposes of the monitoring of environmental parameters such as temperature, humidity, VOC and CO₂ concentration values. Without any software, in order to ensure the accuracy of measurements. For the purposes of validation, before the commencement of the actual tests the correct functioning of devices was verified and loT sensor readings were compared with the results of manual inspections, in order to ensure that the collected data will be accurate and useful for further analysis.

### 5. The collection of measurement data:

Data obtained from loT sensors was collected systematically from June to September 2024, with measurements taken at regular intervals: once a week during the first phase and once every two weeks afterwards. Environmental parameter data was stored within a secure data storage system, in order to ensure its availability and integrity for further analysis.

### 6. Data labelling:

Data was labelled in accordance with the results of manual inspections, in order to accurately indicate the infection status of individual samples. This process enabled the creation of a consistent dataset, which was subsequently used for the training and validation of classification models, improving the reliability and accuracy of the prediction of infections.

### 7. The training of machine learning models

The algorithms were selected on the basis of the diversity of classification methods and their ability to simulate the relations between features defined on the basis of measurements taken at low and high sampling frequencies, including parameters such as atmospheric pressure, temperature, gas resistance, relative humidity, cumulative VOCs and their sensitivity to changes in concentration. The aim of this analysis was to determine the relation between these parameters and the results of the classification of the infection of bees with the varroa parasite. Considering the complex relationship between physical features and the degree of infection, and the wide range of the studied features, the analysis was carried out using five classification algorithms: Logistic regression, Decision tree, Random forest, SVM, KNN.

The process of training the models took into account the specific character of data and the details connected with its processing and preparation for analysis. Data connected with the infection with varroa was collected once a week, while physical features (such as atmospheric pressure, temperature, humidity, etc.) were registered daily on an hourly basis.

Each of the selected models was re-trained in accordance with the following steps:
- Initial configuration: All models were initiated using default parameters and with the random_state=42 setting, in order to ensure the reproducibility of results and comparative stability. This provided a point of reference for the further improvement of hyperparameters in subsequent analyses.

Two validation methods: the 80/20 method and the LOO-type method, enabled the reliable assessment of the stability of the models and helped to reduce the risk of over-training. The LOO method, implemented by testing the model on one case and training it on the others, enables a consistent and accurate assessment of the effectiveness of models. Average accuracy data records were obtained from all iterations, which provided a comprehensive picture of the quality of models.

Assessment on the basis of a test set - after the completion of the training process, models were evaluated on an additional, separate test set that was not previously involved in either training or validation. This generated independent results that represented the final assessment of the efficacy of the models in predicting infection with varroa.

### 8. Validation and assessment of models

The testing was carried out on a dataset previously unknown to the models, for a reliable assessment of their performance. The accuracy, precision, sensitivity and f1-score were examined in the case of each beehive, in order to identify the models that are the most effective in the classification of the presence of varroa mites.

**Table 2 shows the effectiveness of different models used for classification, on the basis of data combined from all beehives.**

| **Classification model** | **Accuracy** | **Precision** | **Recall** | **F1-score** |
|---|---|---|---|---|
| Logistic Regression | 0.676652 | 0.694189 | 0.846972 | 0.763007 |
| Decision Tree | 0.795479 | 0.837140 | 0.828360 | 0.832727 |
| Random Forest | 0.861202 | 0.858334 | 0.927179 | 0.891429 |
| SVM | 0.614561 | 0.614561 | 1.000000 | 0.761273 |
| KNN | 0.655773 | 0.693578 | 0.788035 | 0.737796 |

The Random Forest model achieved the highest results, with an accuracy of 0.8612, while the SVM model was characterised by high sensitivity (1.0000).

### 9. Explainability of model predictions

An analysis of feature importance (on the basis of Random Forest) has revealed that indexes such as 'sgp40-cvoc', 'bme688-gr', and 'sht40-th_tick' have the biggest effect on classification - see Fig. 4. These features are related to the environmental parameters of a beehive that may have an effect on the development of the varroa mite.

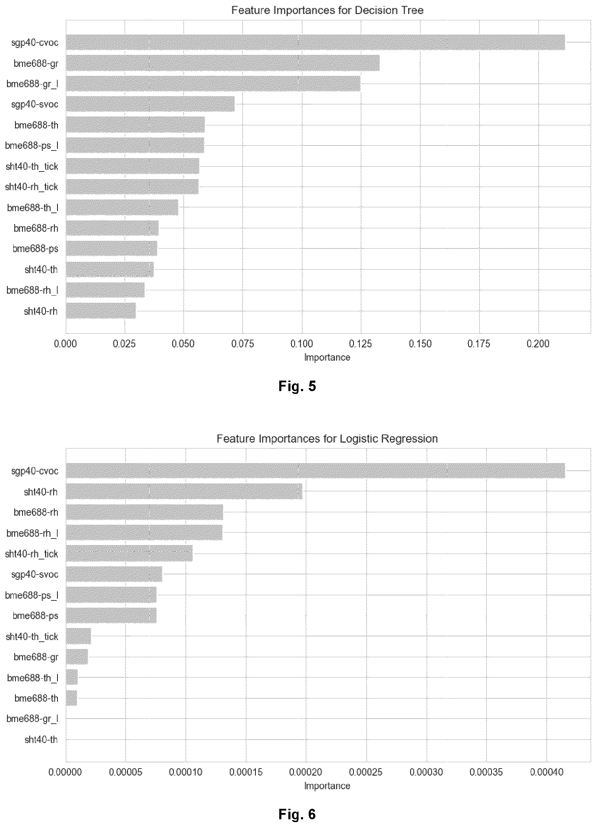

Fig. 5 shows the ranking of the 10 most important learning features for the Decision Tree model, while Fig. 6 shows the same for the Logistic Regression model.

An analysis of the above diagrams shown in Fig. 4, 5 and 6, which demonstrate feature importance for Logistic Regression (LR), Decision Tree (DT) and Random Forest (RF) models, leads to the following conclusions:
Key features:
   - The sgp40-cvoc feature is one of the most important features in all of the models, especially in the Decision Tree and Random Forest models, where its importance is the highest.
   - Features related to humidity, such as sht40-rh and bme688-rh, are also visibly important in the case of the Logistic Regression model and the Decision Tree and Random Forest model. This would suggest that humidity may have significant influence on the final classification.
The consistency of important features:
   - The sgp40-cvoc, bme688-gr, and sht40-rh features are important in all three models. This would suggest that they are generally important in the context of the analysed problem and indicate that they may be key to the successful detection of the objective of the study.
   - Features such as bme688-gr_I and bme688-th are also present in many models, although their importance is lower than that of the above-mentioned features.
Differences in feature importance between models:
   - The logistic regression model demonstrates lower importance values for most features, which is typical of linear models that distribute importance more evenly than non-linear models, such as decision trees and random forests.
   - The decision tree and random forest attribute greater importance to a few key features (e.g. sgp40-cvoc and bme688-gr), due to their ability to capture more complex non-linear relationships.

On the basis of features that are recurrent in the different models, we can conclude that features sgp40-cvoc, bme688-gr, and sht40-rh represent the key variables that have a significant effect on the outcome of classification in each of the used models.

The performed tests have revealed that the Random Forest model was the most effective in the classification of the presence of the varroa mite. The KNN model also performed well, especially in terms of accuracy, while the SVM model proved effective in detecting all positive cases.

### Example 5

The method and system according to the invention were implemented during the 2024 apiary season at the University of Life Sciences in Lublin, at the Department of Apiculture and the Department of Invertebrate Ecophysiology and Experimental Biology.

### 1. The preparation of experimental apiaries

The preparations consisted of the selection of suitable locations, the organisation of the testing area and the establishment of rules for the handling of infected and healthy beehives. Groups of bee colonies were created: a control group, managed in accordance with good beekeeping practices, and an experimental group - infected with *Nosema* spp bacteria causing nosema.

### 2. Characterisation of the analysed groups

Control colonies were treated using standard *Nosema* spp. treatment procedures, while the experimental groups were infected with the appropriate pathogens. In the group infected with *Nosema* spp., infection was induced by administering a substance made of heavily-infected bees, which facilitated the observation of the natural growth of infection and its effect on the bees.

### 3. Manual inspections of the hives:

Manual inspections represented an important element of the project and enabled the regular monitoring of the health of bee colonies and the levels of *Nosema* spp. infection. Inspections consisted of the testing of flying and nesting bees for the presence of parasites and the sampling of hemolymph. The number of spores in samples taken from the hives was also counted, in order to accurately assess the degree of infection with *Nosema* spp. The measurement of the concentration of immune proteins in the hemolymph provided information on the bees' immune response to the infection.

### 4. Installation and validation of loT sensors:

IoT sensors were installed in the beehives and throughout the apiary area, in order to monitor key environmental parameters such as the temperature, humidity, the concentration of VOCs and CO₂. The correct functioning of the measuring system and data transmission was verified after installation. The validation of measurements consisted of the comparison of results with manual inspections, which helped to confirm that the collected data is reliable and can be used for further analysis.

### 5. The collection of measurement data:

Data from loT sensors was collected systematically from June to September 2024, once every week during the first phase of the study and once every two weeks afterwards. Measurement data was stored in a secure system for further processing and analysis.

### 6. Data labelling:

Data obtained from the sensors was labelled in accordance with the results of the manual inspections, which enabled the assignment of appropriate Nosema spp. infection or non-infection labels. This procedure helped in the creation of a high-quality dataset for the training and validation of classification models, which greatly improved the reliability and efficacy of the detection of infections.

### 7. The training of machine learning models

The algorithms were selected on the basis of the diversity of classification methods and their ability to simulate the relations between features defined on the basis of measurements taken at low and high sampling frequencies, including parameters such as atmospheric pressure, temperature, gas resistance, relative humidity, cumulative VOCs and their sensitivity to changes in concentration. The aim of the analysis was to determine the relationship between these features and the results of the classification of the infection of bees with *Nosema spp.* spores. Considering the complex relationship between physical features and the degree of infection, and the wide range of the studied features, the analysis was carried out using five classification algorithms: Logistic regression, Decision tree, Random forest, SVM, KNN.

The process of training the models took into account the specific character of data and the details connected with its processing and preparation for analysis. Data connected with the infection with Nosema was collected once a week, while physical characteristics (such as atmospheric pressure, temperature, humidity, etc.) were registered daily on an hourly basis.

Each of the selected models was re-trained in accordance with the following steps:
- Initial configuration: All models were initiated using default parameters and with the random_state=42 setting, in order to ensure the reproducibility of results and comparative stability. This provided a point of reference for the further improvement of hyperparameters in subsequent analyses.

Two validation methods: the 80/20 method and the LOO-type method, enabled the reliable assessment of the stability of the models and helped to reduce the risk of over-training. The LOO method, implemented by testing the model on one case and training it on the others, enables a consistent and accurate assessment of the effectiveness of models. Average accuracy data records were obtained from all iterations, which provided a comprehensive picture of the quality of models.

Assessment on the basis of a test set - after the completion of the training process, models were evaluated on an additional, separate test set that was not previously involved in either training or validation. This generated independent results that represented the final assessment of the efficacy of the models in predicting infection with Nosema.

### 8. Validation and assessment of models

The testing was carried out on a dataset previously unknown to the models, for a reliable assessment of their performance. The accuracy, precision, sensitivity and f1-score were examined in the case of each beehive, in order to identify the models that are the most effective in the classification of the presence of the Nosema fungus.

**Table 3 shows the effectiveness of different models used for classification**

| **Classification model** | **Accuracy** | **Precision** | **Recall** | **F1-score** |
|---|---|---|---|---|
| **KNN** | 0.7411 | 0.7116 | 0.7448 | 0.7279 |
| **Random forest** | 0.8411 | 0.8352 | 0.8200 | 0.8275 |
| **Decision tree** | 0.7670 | 0.7466 | 0.7552 | 0.7508 |
| **Logistic regression** | 0.6013 | 0.5817 | 0.5073 | 0.5419 |
| **SVM** | 0.6853 | 0.6459 | 0.7152 | 0.6787 |

The table demonstrates the results for five classification models across four key data records: accuracy, precision, sensitivity and F1-score. The KNN model achieved an accuracy of 0.7411, which indicates good overall performance, with the precision of 0.7116 and the sensitivity of 0.7448, which translates into an F1-score of 0.7279. Random Forest proved to be the best model, achieving the highest accuracy (0.8411), precision (0.8352), sensitivity (0.8200) and F1-score (0.8275), which indicates that it is highly effective in classification. The Decision Tree model achieved satisfactory results, with an accuracy of 0.7670, precision of 0.7466, sensitivity of 0.7552 and an F1-score of 0.7508. The Logistic Regression model proved to be the least effective, with an accuracy of 0.6013, precision of 0.5817, sensitivity of 0.5073 and F1-score of 0.5419, which indicates its limited use in this context. The SVM model achieved scores of 0.6853 for accuracy, 0.6459 for precision, 0.7152 for sensitivity and 0.6787 for the F1-score, which indicates its average effectiveness when compared to the other models.

The Random Forest model turned out to be the most effective tool for classification, while the Logistic Regression model requires further optimisation, or a different approach in the analysed conditions.

### 9. Explainability of model predictions

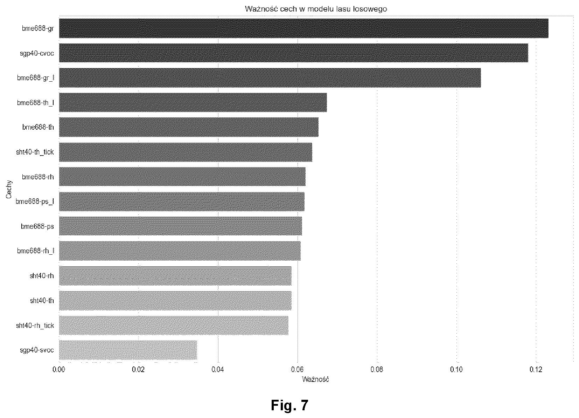

The graph of feature importance in the Random Forest model - Fig. 7 presents the hierarchy of effect of individual variables on the final prediction. Features such as bme688-gr and sgp40-cvoc have by far the greatest effect on the model, which indicates that their values represent key predictors. The higher the position that a feature has on the graph, the greater its contribution to the model's decision-making. Features at the bottom of the chart, such as sgp40-svoc or sht40-rh or sht40-th, on the other hand, are of marginal importance.

On the basis of the performed tests and the analysis of the results of classification of *Nosema* spp. infections in bees, we can conclude that the Random Forest model stands out as the most effective in comparison to the other algorithms.

On the basis of the obtained results, which confirm the high effectiveness of the Random Forest model in diagnosing the health of bees infected with *Nosema* spp, we can conclude that there is a high scientific and commercial potential for the application of machine learning (ML) techniques in combination with loT sensor technology. The integration of these two areas leads to effective monitoring and data analysis, which helps in the early detection of diseases and in the improvement of apiary management.

An analysis of feature importance in the Random Forest model has revealed that parameters such as bme688-gr and sgp40-cvoc have the greatest effect on the accuracy of predictions, which may indicate their critical role in the monitoring and diagnosis of bee infections.

## Claims

1. A system for the monitoring and predicting the risk of occurrence of bee pathogens and environmental hazards, **characterised in that** it comprises:
a) at least one loT sensor (1) located in a single hive and provided with at least one detector (2) for the measurement of environmental parameters: the concentration of volatile organic compounds (VOCs), temperature and humidity,
b) an loT gateway (3) that collects data from loT sensors (1) located in different beehives of the same apiary, also provided with an electronic module that enables the geographic location of an apiary with beehives via its connection with a satellite system, and transmits this information to a back-end system located within a computing cloud,
c) a module (4) that provides satellite imagery and information on weather conditions,
d) a machine learning module (5) that estimates the probability of occurrence of bee pathogens such as fungi, bacteria, viruses and parasites,
e) a map generation module (9) that indicates the probability of occurrence of the risk of a specific pathogen,
f) a user interface module (10) for the presentation of data related to the risk of occurrence of bee pathogens in a beehive.

2. The system according to claim 1, **characterised in that** it additionally comprises one or more modules selected from the following list: a machine learning module (6) that predicts the phenological stages of pollen- and nectar-producing plants, a machine learning module (7) that predicts the anthesis of pollen- and/or nectar-producing plants, a machine learning module (8) that predicts the propagation of pathogens in the environment.

3. The system according to claim 1, **characterised in that** detector (2) is a type BME680, BME688, SGP40 or SGP41 electrochemical or a semiconductor gas detector.

4. The system according to claim 1 or 3, **characterised in that** it is equipped with at least one apiary scale (11) provided with a temperature and humidity sensor.

5. The system according to claim 1 or 3, **characterised in that** the system is equipped with an additional sensor (2) for the measurement of the following parameters: CO₂, NO₂, ethanol, O₃,

6. The system according to claim 1 **characterised in that** loT sensor (1) is equipped with a digital microphone (12).

7. The system according to claim 1, **characterised in that** the loT sensor (1) is located on the frame in the beehive nest, or on the vented inner cover of the beehive.

8. A computer-implemented method of monitoring and predicting the risk of occurrence of bee pathogens and environmental hazards, **characterised in that** it comprises the following steps:
a) the registration of the following environmental parameters: the concentration of volatile organic compounds (VOCs), temperature, humidity, by at least one loT sensor (1) provided with at least one detector (2) located in a single beehive,
b) the transmission of registered environmental parameters by the at least one sensor (1) to loT gateway (3),
c) the transmission of data from module (4) that provides satellite imagery of areas in the vicinity of the apiary within a 5 km radius and information on weather conditions in areas in the vicinity of the apiary within a 5 km radius, to loT gateway (3).
d) the compression and transmission of data, preferably via an LTE/5G network, from loT gateway (3) to a back-end system hosted in a computing cloud,
e) the transmission of data to a machine learning module (5) that estimates the probability of occurrence of bee pathogens such as fungi, bacteria, viruses, parasites,
f) the processing of data in machine learning modules, using at least one classification algorithm selected from the following list: Light Gradient Boosting Machine (LightGBM), Random Forest, Extreme Gradient Boosting (XGBoost), Extra Trees, Logistic Regression, Long-Short Memory Neural Network (LSTM-NN), Transformer architecture-based neural network models,
g) the analysis of results and the generation of maps showing risk areas of the higher probability of occurrence of pathogens and possible directions of their propagation.

9. The method according to claim 8, **characterised in that** data collected in step (a) additionally includes one or more parameters selected from the following group: CO₂, NO₂, ethanol, O₃.

10. The method according to claim 8, **characterised in that** the detector is a type BME680, BME688, SGP40 or SGP41 electrochemical or a semiconductor gas detector.

11. The method according to claim 8, **characterised in that** data in step (a) is collected using MEMS and/or CMOS technology.

12. The method according to claim 8, **characterised in that** the following data: weight, temperature, humidity, is collected using an apiary scale (11).

13. The method according to claim 8, **characterised in that** data is transmitted from loT sensors (1) to loT gateway (3) using wireless communication technology, using the Bluetooth Low Energy (BLE) protocol.

14. The method according to claim 8, **characterised in that** data transmitted in step d) is additionally transmitted to at least one additional module from the following list: a machine learning module (6) that predicts the phenological stages of pollen- and nectar-producing plants, a machine learning module (7) that predicts the anthesis of pollen- and/or nectar-producing plants, a machine learning module (8) that predicts the propagation of pathogens in the environment.

15. The method according to claim 8, **characterised in that** the machine learning module (5) in step d) that estimates the probability of occurrence, applies to bee pathogens selected from the following group: *Varroa destructor, American foulbrood, European foulbrood, Nosema spp., Ascosphaera apis.*
